# EUROPEAN PATENT SPECIFICATION

(11) **EP 1 289 725 B1**
(45) Date of publication and mention of the grant of the patent: **17.08.2005**
(21) Application number: 01934208.8
(22) Date of filing: 06.06.2001
(51) Int. Cl.: B29C 33/38

(54) **A METHOD OF MAKING A MOULDING TOOLING**
VERFAHREN ZUR HERSTELLUNG EINES WERKZEUGFORMS
PROCEDE DE FABRICATION D'UNE OUTILLAGE DE MOULAGE

(30) Priority: 06.06.2000 GB 0013691
(43) Date of publication of application: 12.03.2003
(73) Proprietor: Plastech Thermoset Tectonics Limited, Gunnislake, Cornwall PL18 9AR (GB)
(72) Inventor: HARPER, Alan Roger, Gunnislake, Cornwall PL18 9AR (GB)
(74) Representative: Brown, Michael Stanley
(86) International application number: PCT/GB2001/002476
(87) International publication number: WO 2001/094089

(56) References cited:
- GB-A- 822 726
- GB-A- 2 243 107
- GB-A- 2 319 205
- US-A- 3 124 092
- US-A- 4 231 982

## Description

### Field of the Invention

This invention relates to the manufacture of moulding tooling.

It is known to manufacture moulding tools in the form of composite moulds based on low-mass heated or unheated high-temperature composite skins with integral cores. The skins and cores are supported by a profiled shim which is, in turn, supported by suitably shaped frame bolsters.

A composite mould can make use of a metal-faced mould. The metal can be deposited as a skin by, for example, metal spraying sheet forming, casting or machining. Whatever means are used to provide a skin, the metal thickness is kept to a minimum and the skin is cradled in a composite material including an embedded heater. It is supported as a skin adapted for high-temperature operation my means of steel support frames which serve to provide for readily matchable mould sets.

As originally conceived, solid bonding of the skin to the supporting frame reduced, if it did not actually prevent, allowance for movement between the skin and the frame. Such movement is desirable in order to allow for a degree of relative movement between the skin and the frame arising from differential expansion because of the difference coefficients of thermal expansion of the skin and the frame.

In British Patent Specification No. 2 319 205, there is described a process for the manufacture of moulding tooling comprising the use of a thin skin mould supported in a bolster by means of an elastomeric shim extending over the entire undersurface of the skin. The shim is, in turn, supported on an in-fill in the bolster.

The specific process described in Specification No. 2 319 205 includes the following steps:-
1) forming a skin layer of plastics material on a surface of a master pattern member, the skin layer having an inner face contacting the master pattern member and an exposed outer face,
2) depositing a calibration layer on the exposed face of the skin layer, the calibration layer having an inner face contacting the skin layer and an exposed outer face,
3) depositing a bolster layer incorporating a heat insulating material on the exposed face of the calibration layer,
4) shrouding the exposed face of the bolster layer by means of a bolster frame so as to provide an in-fill volume between the exposed face of the bolster layer and an inner face of the bolster frame,
5) filling the in-fill volume with an aggregate material providing for thermal insulation between the bolster layer and the bolster frame,
6) separating the master pattern member with the skin layer retained thereon from the bolster frame, the bolster layer and the calibration layer,
7) removing the calibration layer to expose the inner face of the bolster layer,
8) providing a release means on the exposed inner face of the bolster layer,
9) relocating the master pattern member with the skin layer retained thereon into the bolster frame and the bolster layer so as to define a volume left on removal of the calibration layer between the exposed outer face of the skin layer and the exposed inner face of the bolster layer,
10) injecting a plastics material into the volume between the two exposed faces to provide a bedding shim reproducing the exposed face of the skin layer,
11) separating the master pattern member from the remainder of the assembly when formation of the bedding shim is complete, and
12) locating the skin layer on the bedding shim in the bolster to provide the tool, which comprises the skin layer releasably mounted on the bolster layer by means of the bedding shim and the bolster layer retained in the bolster frame.

It is an object of the present invention to provide a method of tooling manufacture which has a number of advantages as compared to the method described in Specification No. 2 319 205.

### Summary of the Invention

According to the present invention there is provided a method of making tooling comprising the following steps:-
a) preparing a master model having a first surface,
b) forming a thin-skinned mould from the first surface of the master model, the thin-skinned mould having an inner surface corresponding to the first surface of the master model and an outer surface spaced from the inner surface thereof,
c) fabricating a bolster in contact with, and releasable from, the outer surface of the thin-skinned mould, which bolster is intended to serve as a support structure for either the thin-skinned mould or a replica thereof,
d) removing the bolster and the thin-skinned mould from the master model and thereafter supporting the thin-skinned mould by means of the bolster, the bolster being in contact with the outer surface of the thin-skinned mould,
e) locating a layer of a thickness calibration material on the inner surface of the thin-skinned mould, the layer corresponding in thickness to an article to be produced by means of the tooling,
f) forming a matching mould set contra half against the layer of calibration material while the layer of calibration material and the thin-skinned mould are supported by the bolster,
g) removing the matching mould set contra half from the combination of the calibration material, the thin-skinned mould and the bolster and thereafter removing the layer of calibration material from the inner surface of the thin-skinned mould,
h) aligning the combination of the bolster and the thin-skinned mould with the matching mould set contra half to define a cavity corresponding to the space previously occupied by the layer of calibration material,
i) coating the surfaces defining the cavity with a release agent and thereafter casting a rigid skin member in the cavity,
j) removing the matching mould set contra half from registration with the combination of the bolster and the thin-skinned mould, and
k) removing the rigid skin member from the thin-skinned mould.

The rigid skin member is preferably then placed on the mould set contra half, in register therewith, to provide a moulded replica of the first surface of the master model.

A replica of the first thin-skinned mould is preferably produced by:-
registering the combination of the bolster and the rigid skin member with the mould set contra half to define a cavity which acts as a mould for a replica of the first thin-skinned mould, and
casting the replica in the thus-defined cavity.

It is to be appreciated that any desired number of replica thin-skinned moulds may be produced in this way.

Forming of the thin-skinned mould may be effected by casting. If desired, a surface of the thin-skinned mould may be produced by a fabrication, pressing, metal spraying or electro-forming process.

The step of fabricating the bolster preferably involves a computer numerically controlled machining operation to provide for the subsequent mounting of a thin-skinned mould or replica thereon. The thin-skinned mould or replica is preferably retained on the bolster by the application of a sub-atmospheric pressure.

### Brief Description of the Drawings

Figures 1A, 1B and 1C show the initial stages in the manufacture of mould tooling, and
Figures 2A and 2B show the final stages in the manufacture of the mould tooling.

### Description of the Preferred Embodiment

Figure 1A shows a male master model A having a first surface 10 and a female thin-skinned mould B cast from the first surface 10 of the male master model A. The female thin-skinned mould B has an inner surface S1 which corresponds to the first surface 10 of the male master model A. Figure 1A also shows a bolster C which is cast from surface S2 of the female thin-skinned mould B while the female thin-skinned mould B is accurately supported and located by the male master model A. The bolster C acts as a support structure for the female thin-skinned mould B during subsequent production steps. The bolster C may include means for surface heating.

It is to be appreciated that, although the specific master model A shown in the drawings is a male master model, the master model may alternatively be a female master model or a flat master model.

The initial manufacturing steps comprise the accurate formation of the male master model A by, for example, a CNC machining operation, followed by casting of the female thin-skinned mould B, and then by fabrication of the bolster C. The male master model A is then separated from the assembly comprising the bolster C and the female thin-skinned mould B.

Figure 1B shows the bolster C in an inverted condition, the female thin-skinned mould B supported by the bolster C and a layer D of a thickness calibration material, such as a sheet of wax or sheet cork, placed against the inner surface S1 of the female thin-skinned mould B. The female thin-skinned mould B is accurately supported in the bolster C during formation of the calibration layer D. Figure 1B also shows a matching mould set contra half E formed of, for example, a plastics material cast against the upper surface of the calibration layer D, whilst the calibration layer D and the female thin-skinned mould B are both accurately supported by the bolster C.

Thus, after the initial manufacturing steps depicted in Figure 1A, a calibration layer D is carefully and accurately formed on top of the female thin-skinned mould B and then the mould set contra half E is produced. After setting of the plastics material forming the mould set contra half E, the mould set contra half E is displaced upwardly and the calibration layer D is then removed by, for example, melting the wax from which said layer D was produced. The mould set contra half E is then repositioned relative to the bolster C and the female thin-skinned mould B so as to be in precisely the same position as that in which it was produced.

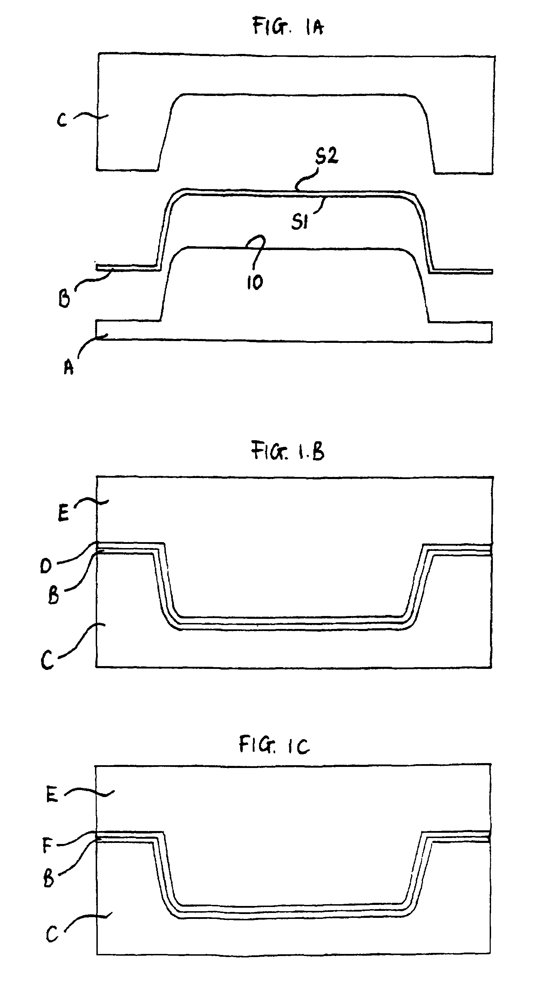

Figure 1C shows the mould set contra half E, the bolster C and the female thin-skinned mould B accurately positioned relative to one another so as to define a cavity in which a rigid skin F is cast. The rigid skin F has a configuration which corresponds exactly with the configuration of the calibration layer D. Rigid skin F is a moulded production part, i.e. it has a configuration corresponding to the required moulded end product. The "good" face of the rigid skin F, i.e. the face of the rigid skin F remote from the mould set contra half, can then be polished after opening of the mould set and removal of the female thin-skinned mould B. The polished face of the rigid skin F thus provides an enhanced mouldable surface which is a replica of the presented surface of the original master model A.

Replicas of the female thin-skinned mould B are then produced by positioning rigid skin F, when supported by the mould set contra half E, in accurate registration with the bolster C to form a cavity G, as shown in Figure 2A. Filling of the cavity G with resin, followed by opening of the mould once the resin has set enables the manufacturer to produce, at low cost, as many replicas of the female thin-skinned mould B as he may require. The production of multiple replicas of the female thin-skinned mould B greatly improves the efficiency of moulding processes which involve the production of large numbers of identical moulded production parts.

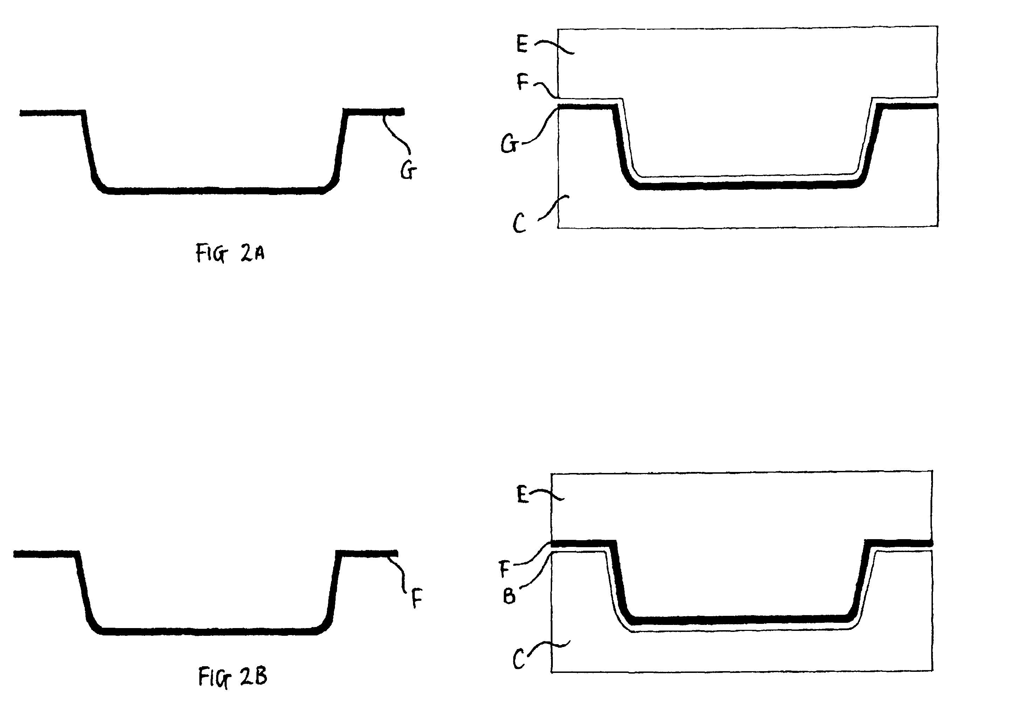

Figure 2B then shows a mould set comprising the bolster C, the mould set contra half E and the female thin-skinned mould part B (or a replica of the female thin-skinned mould part B) used to cast further moulded production parts.

The present invention thus relates to casting replica multiple mould faces for a closed mould system and is applicable to composite moulds, whether or not they are equipped with an internal temperature control system.

The procedures outlined above can readily be applied to metal, ceramic, elastomeric or other suitable mould face materials and are not limited to the use of composite materials, such as reinforced and un-reinforced thermosetting resins.

It is to be appreciated that the method described with reference to the drawings has been referred to in general terms and could, in its simplest form, involve pouring a setting liquid matrix or it could involve injecting the matrix under a pressure difference, whether sub- or super-atmospheric pressure, or a combination of both.

The method of "thin skin" mould manufacture may include the use of a metal spray coat or cold-formed metal sheet of less thickness dimension that the final "thin skin" dimension, with the S2 surface of the thin-skinned mould B (or the replica of the thin-skinned mould B) subsequently being filled with a castable matrix to ensure replication and thus accurate fit to the supporting production bolster C. The working surface of the thin-skinned mould may also be produced by a fabrication or electro-forming process.

The method of the present invention provides for the manufacture of a production bolster C having a contour fit with a thin-skinned mould B produced from a CNC-machined master model A.

The method of the invention involves manufacture of the production bolster C which is thereafter used to support either the female thin-skinned mould or a replica thereof.

A surface to be contacted by material for casting is typically coated with a metal, alloy, ceramic material, elastomeric material or a reinforced or un-reinforced thermosetting resin. If a metal coating is used, this can be applied by a spraying process. Alternatively, the surface is formed by a metal sheet of reduced thickness by comparison with the desired final thin skin, and the required thickness is achieved by a layer of a castable matrix attached to the rear side of the formed metal sheet.

## Claims

1. A method of making tooling comprising the following steps:-
a) preparing a master model (A) having a first surface (10),
b) forming a thin-skinned mould (B) from the first surface (10) of the master model (A), the thin-skinned mould (B) having an inner surface (S1) corresponding to the first surface (10) of the master model (A) and an outer surface (S2) spaced from the inner surface (s1) thereof,
c) fabricating a bolster (C) in contact with, and releasable from, the outer surface (S2) of the thin-skinned mould (B), which bolster (C) is intended to serve as a support structure for either the thin-skinned mould (B) or a replica thereof,
d) removing the bolster (C) and the thin-skinned mould (B) from the master model (A) and thereafter supporting the thin-skinned mould (B) by means of the bolster (C), the bolster (C) being in contact with the outer surface (S2) of the thin-skinned mould (B),
e) locating a layer (D) of a thickness calibration material on the inner surface (S1) of the thin-skinned mould (B), the layer (D) corresponding in thickness to an article to be produced by means of the tooling,
f) forming a matching mould set contra half (E) against the layer (D) of calibration material while the calibration material and the thin-skinned mould (B) are supported by the bolster (C),
g) removing the matching mould set contra half (E) from the combination of the layer (D) of calibration material, the thin-skinned mould (B) and the bolster (C) and thereafter removing the layer (D) of calibration material from the inner surface (S1) of the thin-skinned mould (B),
h) aligning the combination of the bolster (C) and the thin-skinned mould (B) with the matching mould set contra half (E) to define a cavity corresponding to the space previously occupied by the layer (D) of calibration material,
i) coating the surfaces defining the cavity with a release agent and thereafter casting a rigid skin member (F) in the cavity,
j) removing the matching mould set contra half (E) from registration with the combination of the bolster (C) and the thin-skinned mould (B), and
k) removing the rigid skin member (F) from the thin-skinned mould (B).

2. A method as claimed in Claim 1, in which the rigid skin member (F) is then placed on the mould set contra half (E), in register therewith, to provide a moulded replica of the first surface (10) of the master model (A).

3. A method as claimed in either of the preceding claims, in which a replica of the first thin-skinned mould (B) is produced by:-
registering the combination of the bolster (C) and the rigid skin member (F) with the mould set contra half (E) to define a cavity which acts as a mould for a replica of the first thin-skinned mould (B), and
casting the replica in the thus-defined cavity.

4. A method as claimed in any one of the preceding claims, in which the step of fabricating the bolster (C) involves a computer numerically controlled machining operation to provide for the subsequent mounting of the thin-skinned mould (B) or replica thereon.

5. A method as claimed in any one of the preceding claims, in which the thin-skinned mould (B) or replica is retained on the bolster (F) by the application of a sub-atmospheric pressure.

6. A method as claimed in Claim 1, in which the thin-skinned mould (B) is formed by casting.

7. A method as claimed in Claim 1 or Claim 6, in which the matching mould set contra half (E) is formed by casting.

8. A method as claimed in Claim 1 or Claim 6, in which a surface (S1, S2) of the thin-skinned mould (B) is produced by a pressing, metal spraying or electro-forming process.

## Patentansprüche

1. Verfahren zur Herstellung eines Werkzeugs, umfassend die folgenden Schritte:
a) Anfertigen eines Vorlagemodells (A), das eine erste Oberfläche (10) aufweist,
b) Bilden einer dünnhäutigen Form (B) von der ersten Oberfläche (10) des Vorlagemodells (A), wobei die dünnhäutige Form (B) eine innere Oberfläche (S1) aufweist, die der ersten Oberfläche (10) des Vorlagemodells (A) entspricht, und eine äußere Oberfläche (S2) aufweist, die von ihrer inneren Oberfläche (S1) beabstandet ist,
c) Herstellen einer Unterlage (C), die in Kontakt mit der äußeren Oberfläche (S2) der dünnhäutigen Form (B) steht und davon lösbar ist, welche Unterlage (C) als Stützaufbau entweder für die dünnhäutige Form (B) oder eine Nachbildung davon dienen soll,
d) Entfernen der Unterlage (C) und der dünnhäutigen Form (B) vom Vorlagemodell (A) und danach Stützen der dünnhäutigen Form (B) durch die Unterlage (C), wobei die Unterlage (C) mit der äußeren Oberfläche (S2) der dünnhäutigen Form (B) in Kontakt steht,
e) Anordnen einer Schicht (D) eines Dickenkalibrierungsmaterials an der inneren Oberfläche (S1) der dünnhäutigen Form (B), wobei die Schicht (D) in der Dicke einem Gegenstand entspricht, der durch das Werkzeug hergestellt werden soll,
f) Bilden einer passenden Formsatzgegenhälfte (E) gegen die Schicht (D) des Kalibrierungsmaterials, während das Kalibrierungsmaterial und die dünnhäutige Form (B) durch die Unterlage (C) gestützt werden,
g) Entfernen der passenden Formsatzgegenhälfte (E) von der Kombination aus der Schicht (D) des Kalibrierungsmaterials, der dünnhäutigen Form (B) und der Unterlage (C), und danach Entfernen der Schicht (D) des Kalibrierungsmaterials von der inneren Oberfläche (S1) der dünnhäutigen Form (B),
h) Ausrichten der Kombination aus der Unterlage (C) und der dünnhäutigen Form (B) mit der passenden Formsatzgegenhälfte (E), um einen Hohlraum zu definieren, der dem Raum entspricht, welcher vorher durch die Schicht (D) des Kalibrierungsmaterials eingenommen wurde,
i) Überziehen der Oberflächen, die den Hohlraum definieren, mit einem Formtrennmittel und danach Gießen eines Elements (F) mit starrer Haut im Hohlraum,
j) Entfernen der passenden Formsatzgegenhälfte (E) aus der Positionierung mit der Kombination aus der Unterlage (C) und der dünnhäutigen Form (B), und
k) Entfernen des Elements (F) mit starrer Haut aus der dünnhäutigen Form (B).

2. Verfahren nach Anspruch 1, wobei das Element (F) mit starrer Haut dann in Positionierung damit an der Formsatzgegenhälfte (E) angeordnet wird, um eine geformte Nachbildung der ersten Oberfläche (10) des Vorlagemodells (A) bereitzustellen.

3. Verfahren nach einem der vorhergehenden Ansprüche, wobei durch Folgendes eine Nachbildung der ersten dünnhäutigen Form (B) hergestellt wird:
Positionieren der Kombination aus der Unterlage (C) und dem Element (F) mit starrer Haut mit der Formsatzgegenhälfte (E), um einen Hohlraum zu definieren, der als eine Form für eine Nachbildung der ersten dünnhäutigen Form (B) wirkt, und
Gießen der Nachbildung im **dadurch** definierten Hohlraum.

4. Verfahren nach einem der vorhergehenden Ansprüche, wobei der Schritt des Herstellens der Unterlage (C) einen durch einen Computer numerisch gesteuerten Bearbeitungsvorgang umfasst, um für die anschließende Anbringung der dünnhäutigen Form (B) oder der Nachbildung daran Vorsorge zu treffen.

5. Verfahren nach einem der vorhergehenden Ansprüche, wobei die dünnhäutige Form (B) oder die Nachbildung durch die Ausübung eines subatmosphärischen Drucks an der Unterlage (C) zurückgehalten wird.

6. Verfahren nach Anspruch 1, wobei die dünnhäutige Form (B) durch Gießen gebildet wird.

7. Verfahren nach Anspruch 1 oder Anspruch 6, wobei die passende Formsatzgegenhälfte (E) durch Gießen gebildet wird.

8. Verfahren nach Anspruch 1 oder Anspruch 6, wobei eine Oberfläche (S1, S2) der dünnhäutigen Form (B) durch einen Press-, Metallspritz- oder Elektroformungsprozeß hergestellt wird.

## Revendications

1. Procédé de fabrication d'outillage comprenant les étapes suivantes :
a) préparation d'un modèle maître (A) ayant une première surface (10),
b) formation d'un moule à paroi mince (B) à partir de la première surface (10) du modèle maître (A), le moule à paroi mince (B) ayant une surface interne (S1) correspondant à la première surface (10) du modèle maître (A) et une surface externe (S2) espacée de la sa surface interne (S1),
c) fabrication d'une semelle (C) en contact avec la surface externe (S2) du moule à paroi mince (B) et pouvant être détachée de celle-ci, laquelle semelle (C) est prévue pour servir de structure de support pour le moule à paroi mince (B) ou une réplique de celui-ci,
d) retrait de la semelle (C) et du moule à paroi mince (B) du modèle maître (A) puis support du moule à paroi mince (B) au moyen de la semelle (C), la semelle (C) étant en contact avec la surface externe (S2) du moule à paroi mince (B),
e) localisation d'une couche (D) de matériau de calibrage d'épaisseur sur la surface interne (S1) du moule à paroi mince (B), la couche (D) ayant une épaisseur correspondant à un article à produire au moyen de l'outillage,
f) formation d'une moitié conjuguée adaptée (E) du jeu de moule contre la couche (D) de matériau de calibrage tandis que le matériau de calibrage et le moule à paroi mince (B) sont supportés par la semelle (C),
g) retrait de la moitié conjuguée adaptée (E) du jeu de moule de la combinaison de la couche (D) de matériau de calibrage, du moule à paroi mince (B) et de la semelle (C) puis retrait de la couche (D) de matériau de calibrage de la surface interne (S1) du moule à paroi mince (B),
h) alignement de la combinaison de la semelle (C) et du moule à paroi mince (B) avec la moitié conjuguée adaptée (E) du jeu de moule pour définir une cavité correspondant à l'espace préalablement occupé par la couche (D) de matériau de calibrage,
i) revêtement des surfaces définissant la cavité d'un agent de démoulage puis coulage d'un organe à paroi rigide (F) dans la cavité,
j) retrait de la moitié conjuguée adaptée (E) du jeu de moule de son alignement avec la combinaison de la semelle (C) et du moule à paroi mince (B) et
k) retrait de l'organe à paroi rigide (F) du moule à paroi mince (B).

2. Procédé selon la revendication 1, dans lequel l'organe à paroi rigide (F) est ensuite placé sur la moitié conjuguée (E) du jeu de moule, en alignement avec elle, pour fournir une réplique moulée de la première surface (10) du modèle maître (A).

3. Procédé selon l'une quelconque des revendications précédentes, dans lequel une réplique du premier moule à paroi mince (B) est produite par :
alignement de la combinaison de la semelle (C) et de l'organe à paroi rigide (F) avec la moitié conjuguée (E) du jeu de moule pour définir une cavité qui sert de moule pour une réplique du premier moule à paroi mince (B), et
coulage de la réplique dans la cavité ainsi définie.

4. Procédé selon l'une quelconque des revendications précédentes, dans lequel l'étape consistant à fabriquer la semelle (C) fait intervenir une opération d'usinage commandée numériquement par ordinateur pour assurer le montage subséquent du moule à paroi mince (B) ou de la réplique sur celle-ci.

5. Procédé selon l'une quelconque des revendications précédentes, dans lequel le moule à paroi mince (B) ou la réplique est retenu(e) sur la semelle (F) par l'application d'une pression sous-atmosphérique.

6. Procédé selon la revendication 1, dans lequel le moule à paroi mince (B) est formé par coulage.

7. Procédé selon la revendication 1 ou 6, dans lequel la moitié conjuguée adaptée (E) du jeu de moule est formée par coulage.

8. Procédé selon la revendication 1 ou 6, dans lequel une surface (S1, S2) du moule à paroi mince (B) est produite par pressage, pulvérisation de métal ou par un processus d'électroformage.
